# EUROPEAN PATENT APPLICATION

(11) **EP 4 733 657 A1**
(43) Date of publication of application: **29.04.2026**
(21) Application number: 25197746.8
(22) Date of filing: 22.08.2025
(51) Int. Cl.: F17C 13/08

(54) **CRYOGENIC LIQUID STORAGE SYSTEM**

(30) Priority: 25.10.2024 GB 202415715
(71) Applicant: Airbus Operations Limited, Bristol BS34 7PA (GB)
(72) Inventor: LAWRENCE, Harry, Filton BS34 7PA (GB)
(74) Representative: Ribeiro, James Michael

(57) **Abstract**

A cryogenic liquid storage system comprising: an outer tank (22); an inner tank (24) inside the outer tank and configured to store a cryogenic liquid; an isolation valve (40); a collection chamber (26) outside the outer tank and fluidically connected to the inner tank to enable fluid to flow from the inner tank to the collection chamber via the isolation valve, wherein the isolation valve can be actuated to isolate the collection chamber from the inner tank; and a measurement probe (50) movable between the inner tank and the collection chamber.

## Description

### FIELD OF THE INVENTION

The present invention relates to a cryogenic liquid storage system, an aircraft, and a method of accessing a measurement probe in a cryogenic liquid storage system.

### BACKGROUND OF THE INVENTION

Maintaining cryogenic liquid storage systems, in particular components within cryogenic storage tanks, is challenging given the difficulties in reaching components housed within multi-walled storage vessels. Accessing such components often requires draining the liquid stored within the cryogenic storage tank, removing any vacuum, and providing a user direct access to the inside of the tank to reach the components. This is time consuming and labour intensive, particularly where the storage tank stores cryogenic liquid since the apparatus must be brought up to ambient temperature gradually once it is drained and prior to accessing the required components.

### SUMMARY OF THE INVENTION

A first aspect of the invention provides a cryogenic liquid storage system comprising: an outer tank; an inner tank inside the outer tank and configured to store a cryogenic liquid; an isolation valve; a collection chamber outside the outer tank and fluidically connected to the inner tank to enable fluid to flow from the inner tank to the collection chamber via the isolation valve, wherein the isolation valve can be actuated to isolate the collection chamber from the inner tank; and a measurement probe movable between the inner tank and the collection chamber.

Providing a collection chamber outside the outer tank provides a user access to a volume fluidically connected to the inner tank without requiring access to the inner tank directly, such as for example through access ports in both the outer and inner tanks. Providing a measurement probe movable from the inner tank to the collection chamber (and vice versa) may therefore allow the probe to be accessed more easily, for example improving ease of maintenance of the measurement probe. Providing an isolation valve between the collection chamber and the inner tank allows fluidic communication between the inner tank and the collection chamber to be selectively prevented. In this way, the collection chamber may be isolated from the inner tank such that it can be accessed, purged or otherwise modified without affecting conditions within the inner tank.

Optionally the measurement probe is movable between the inner tank and the collection chamber via the isolation valve.

The cryogenic liquid storage system may further comprise cryogenic liquid in the inner tank.

The cryogenic liquid may comprise hydrogen, helium or any other cryogenic liquid. The term "cryogenic liquid" is used herein to refer to a liquid below -150degC.

The cryogenic liquid may comprise a fuel, such as an aircraft fuel.

The measurement probe may be at least partially submerged in the cryogenic liquid.

Providing the measurement probe submerged in cryogenic liquid in the inner tank may allow a range of parameters of the cryogenic liquid to be measured or otherwise monitored. Examples of these parameters may include a level or quantity of the liquid, or a temperature of the liquid.

The measurement probe may be configured to measure a quantity of cryogenic liquid in the inner tank (for instance a volume, mass or level of the liquid).

Providing a measurement probe configured to measure a quantity of liquid in the inner tank may allow the amount of liquid in the inner tank to be monitored over time. This data may in turn be used to determine the rate of change in cryogenic liquid quantity, when the quantity of cryogenic liquid in the inner tank reaches a predetermined value, or when the inner tank should be refilled with cryogenic liquid.

The cryogenic liquid storage system may further comprise a guide rail arrangement (comprising one or more guide rails) extending from the collection chamber into the inner tank. The measurement probe maybe coupled to the guide rail arrangement and configured to move along the guide rail arrangement as it moves between the inner tank and the collection chamber.

The measurement probe may be guided by the guide rail arrangement and/or constrained by the guide rail arrangement.

Optionally the guide rail arrangement has a gap at the isolation valve.

The isolation valve may define a valve aperture through which fluid may flow between the collection chamber and the inner tank, and across which a gate or other closure may extend when actuated to prevent flow of fluid therethrough. As such, the guide rail arrangement may extend through the valve aperture and hence extend from the collection chamber into the inner tank via the isolation valve.

A guide rail arrangement may provide a convenient structure for defining a path which the measurement probe follows when moving between the inner tank and the collection chamber. In this way, the guide rail arrangement may be used to control the position of the measurement probe in the inner tank, the collection chamber or its movement therebetween.

A first portion of the guide rail arrangement may extend downwardly within the inner tank. A second portion of the guide rail arrangement may extend laterally within the collection chamber. The second portion of the guide rail arrangement may be substantially perpendicular to the first portion of the guide rail arrangement. A curved portion of the guide rail arrangement may connect the first portion of the guide rail arrangement to the second portion of the guide rail arrangement.

Providing a first portion of the guide rail arrangement extending downwardly within the inner tank may allow the measurement probe to extend downwardly along the guide rail arrangement within the inner tank, optionally from the top of the inner tank. This may allow the measurement probe to be used as a liquid level sensor. Providing a second portion of the guide rail arrangement extending laterally within the collection tube may allow the height of the cryogenic liquid storage system to be reduced, compared to for example a guide rail arrangement extending upwardly within the collection chamber. A curved portion of the guide rail arrangement may provide a path along which the measurement probe may move between the inner tank and the collection chamber.

The isolation valve may comprise a housing defining a valve aperture through the isolation valve, and a closure for blocking the valve aperture. The guide rail arrangement may comprise a gap through which the closure is movable.

Providing an isolation valve comprising a physical closure movable to block a valve aperture may provide a convenient method of isolating the collection chamber from the inner tank. Where the closure extends across the entirety of the valve aperture to block the flow of fluid therethrough, a gap in the guide rail allows the closure to be actuated without being impeded by the guide rail arrangement.

The guide rail arrangement may comprise an end stop in the inner tank for limiting movement of the measurement probe along the guide rail arrangement.

An end stop may provide a convenient method for limiting movement of the measurement probe beyond a target location in the inner tank and/or for controlling tension within the probe, for example where the probe hangs downwardly from the top of the inner tank under its own weight.

The guide rail arrangement may have at least one curved portion within the collection chamber. The guide rail arrangement may follow a U-shaped path in the collection chamber.

Providing a guide rail arrangement having a curved portion in the collection chamber may reduce the length of the collection chamber required to house the measurement probe when the probe is in the collection chamber.

The cryogenic liquid storage system may further comprise a tubular bellows between the inner tank and the outer tank. The bellows may fluidically connect the inner tank to the collection chamber.

The tubular bellows may provide a convenient method of connecting the inner tank and the outer tank to accommodate movement (for example due to changes in temperature) of the inner tank relative to the outer tank.

Optionally the measurement probe further comprises a chain, and the system further comprises a drive mechanism, such as a pinion gear, arranged to engage the chain to move the measurement probe between the inner tank and the collection chamber. The chain may be movable between the inner tank and the collection chamber.

Optionally when the measurement probe is in the inner tank, the chain extends from the collection chamber into the inner tank via the isolation valve.

Optionally the measurement probe comprise one or more cables, such as fibre optic cables or electrical cables. Optionally when the measurement probe is in the inner tank, the (or each) cable extends from the collection chamber into the inner tank via the isolation valve.

The chain may comprise a flexible series of links, where each link is optionally rotatable relative to the adjacent link(s).

A chain may provide a convenient component to engage with a drive mechanism (such as a pinion gear) to move the measurement probe in a linear motion, optionally along the guide rail arrangement.

The drive mechanism may comprise a clutch for selectively disengaging the drive mechanism from the chain.

Providing means for selectively disengaging the drive mechanism from the chain may facilitate removal of the chain from the drive mechanism and/or the collection chamber, optionally for maintenance.

An evacuated space between the inner tank and the outer tank may be provided.

Providing an evacuated space between the inner tank and the outer tank may improve the insulative effects of the cryogenic liquid storage system, and in particular may reduce thermal transfer from and/or to the inner tank.

The collection chamber may comprise a port for connecting to a pump for purging the collection chamber.

Purging the collection chamber may be defined as removing fluid from the collection chamber. Providing means for purging the collection chamber allows fluid in the collection chamber to be removed, for example before the collection chamber is opened to provide a user access to the collection chamber.

The cryogenic liquid storage system may further comprise a pressure sensor in the collection chamber.

Providing a pressure sensor in the collection chamber outside the outer tank may allow the pressure within the inner tank to be monitored when the inner tank and the collection chamber are fluidically connected, without requiring direct access to the inner tank. This may improve ease of maintenance for the pressure sensor since it may be more readily accessed than a pressure sensor in the inner tank.

A second aspect of the invention provides an aircraft comprising the cryogenic liquid storage system of the first aspect of the invention. The cryogenic liquid storage system may comprise an aircraft fuel storage system.

A third aspect of the invention provides a method of accessing a measurement probe of a cryogenic liquid storage system, the cryogenic liquid storage system comprising; an outer tank; an inner tank inside the outer tank; a cryogenic liquid in the inner tank; an isolation valve; a collection chamber outside the outer tank and fluidically connected to the inner tank to enable fluid to flow from the inner tank to the collection chamber via the isolation valve; and a measurement probe in the inner tank, the method comprising: retracting the measurement probe from the tank into the collection chamber via the isolation valve; actuating the isolation valve to isolate the collection chamber from the inner tank, thereby preventing fluid from flowing from the inner tank to the collection chamber via the isolation valve; opening the collection chamber; and accessing the measurement probe in the opened collection chamber.

The method may further comprise purging the collection chamber once the isolation valve is actuated to isolate the collection chamber from the inner tank.

Purging the collection chamber once the isolation valve has been actuated may allow fluid in the collection chamber to be removed without affecting conditions and/or the fluid in the inner tank.

A fourth aspect of the invention provides an aircraft comprising a cryogenic fuel storage system, the cryogenic fuel storage system comprising: an outer tank; an inner tank inside the outer tank; a cryogenic fuel in the inner tank; an isolation valve; a collection chamber outside the outer tank and fluidically connected to the inner tank to enable fluid to flow from the inner tank to the collection chamber via the isolation valve; a measurement probe movable between the inner tank and the collection chamber, the measurement probe comprising a chain, wherein the measurement probe is submerged in the cryogenic fuel when in the inner tank; a guide rail arrangement extending from the collection chamber into the inner tank and along which the measurement probe is movable, the guide rail arrangement comprising: a first portion in the inner tank extending downwardly from a top of the inner tank; and a second portion in the collection chamber extending substantially perpendicular to the first portion of the guide rail arrangement.

### BRIEF DESCRIPTION OF THE DRAWINGS

Embodiments of the invention will now be described with reference to the accompanying drawings, in which:
Figure 1 shows an aircraft;
Figure 2 shows a portion of the aircraft of Figure 1;
Figure 3 shows a cryogenic liquid storage system;
Figure 4 shows a portion of the cryogenic liquid storage system of Figure 3 with the probe in a deployed position in the inner tank;
Figure 5 shows a detailed view of a portion of the cryogenic liquid storage system of Figure 4, with the measurement probe in the deployed position in the inner tank;
Figure 6 shows a portion of the cryogenic liquid storage system of Figure 3 with the measurement probe in a retracted position in the collection chamber;
Figure 7 shows a detailed view of a portion of the cryogenic liquid storage system of Figure 6;
Figure 8a shows a curved portion of the measurement probe;
Figure 8b is a schematic cross-sectional view showing the coupling between the chain and the guide rail arrangement; and
Figure 9 shows a method according to an embodiment of the invention.

### DETAILED DESCRIPTION OF EMBODIMENT(S)

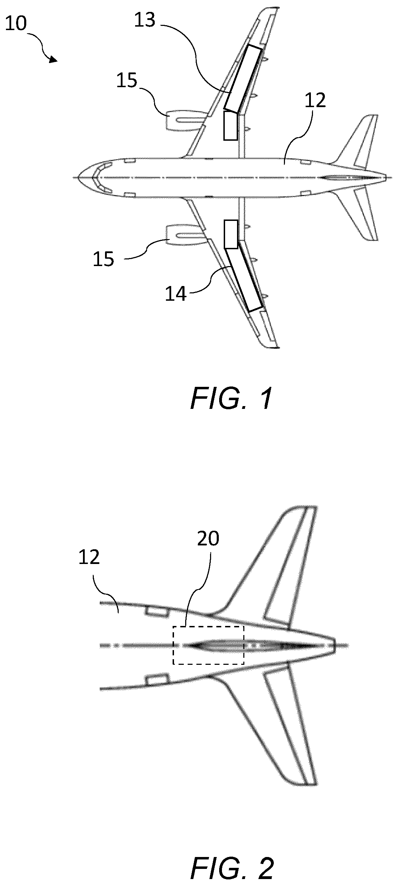

Figure 1 shows an aircraft 10. The aircraft 10 has a fuselage 12, and starboard and port fixed wings 13, 14. An engine 15 is mounted to each wing 13, 14. The aircraft 10 is a typical jet passenger transport aircraft but the invention is applicable to a wide variety of fixed wing aircraft types, including commercial, military, passenger, cargo, jet, propeller, general aviation, etc. with any number of engines attached to the wings or fuselage. The aircraft is a fixed wing aircraft with cantilever wings.

The aircraft 10 comprises a cryogenic liquid storage system 20, shown schematically in Figure 2. Although shown within the fuselage 12 of the aircraft 10, it will be appreciated that the liquid storage system 20 may be housed anywhere in the aircraft 10, for example in a wing 13, 14. It will further be appreciated that the aircraft 10 may comprise any number of liquid storage systems 20, such as for example two separate liquid storage systems 20 housed within the fuselage 12. The liquid storage system 20 may be a cryogenic fuel tank configured to store a cryogenic fuel, such as liquid hydrogen, to be supplied to the engines 15.

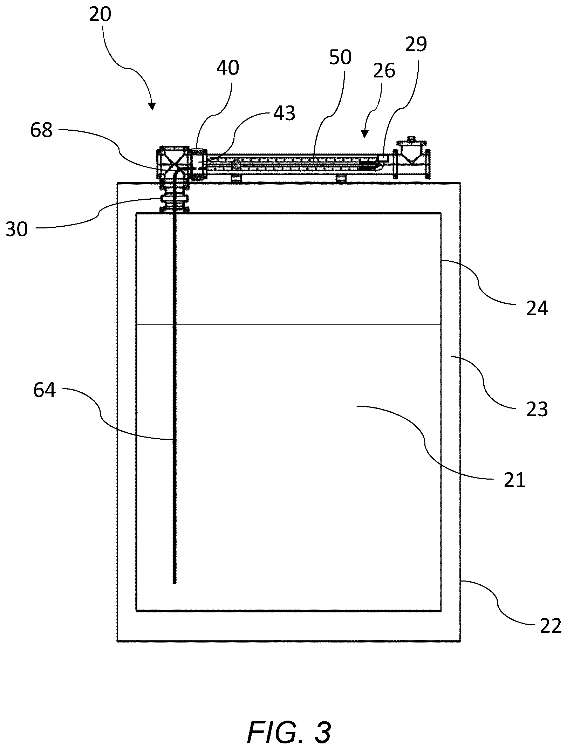

Figure 3 shows a cross section of a schematic representation of the liquid storage system 20. The liquid storage system 20 comprises an outer tank 22 and an inner tank 24 supported inside the outer tank 22. It will be appreciated that the inner tank 24 may be supported using any suitable support structure (not shown) and that the inner tank 22 is spaced apart from the outer tank 22. The inner tank 24 is configured to store a cryogenic liquid 21. An evacuated space 23 between the outer tank 24 and the inner tank 22 reduces heat transfer to the inner tank 22. The outer tank 22 and the inner tank 24 may comprise a port (not shown) for filling the inner tank 24 with the cryogenic liquid 21 and/or for removing the cryogenic liquid 21 from the inner tank 24.

The liquid storage system 20 further comprises a collection chamber 26 outside the outer tank 22. The collection chamber 26 may be referred to as an external collection chamber 26, external here defined as being outside the outer tank 22. The collection chamber 26 may be formed as a separate component to the outer tank 22 or alternatively it may be manufactured integrally with the outer tank 22, for example formed as a "blister" on an outer surface of the outer tank 22. It may be preferable to provide the collection chamber 26 as a separate component connected to the outer tank 22 such that a common collection chamber 26 can be fitted to a range of liquid storage systems 20.

The collection chamber 26 is fluidically connected to the inner tank 24. A fluidic connection between components is here defined as a connection that permits the flow of fluid (i.e. a liquid or a gas) between those components. In this way, fluid may flow between the inner tank 24 and the collection chamber 26. In the liquid storage system 20 shown in Figure 3, the collection chamber 26 is fluidically connected to the inner tank 24 via a tubular bellows 30. The tubular bellows 30 extends between the outer tank 22 and the inner tank 24 and provides a sealed passage between the collection chamber 26 and the inner tank 24. The tubular bellows 30 may comprise a flexible walled pipe, such as for example a pipe comprising side walls formed of a corrugated rubber material. This arrangement may permit movement of the inner tank 24 relative to the outer tank 22 whilst still maintaining a passage for fluid to flow between the inner tank 24 and the collection chamber 26. By way of non-limiting example, the inner tank 24 may be supported by a bearing assembly (not shown) that allows movement of the inner tank 24 relative to the outer tank 22 in the horizontal direction (i.e. to the left and right in the view of Figure 3). Such movement may be caused by expansion and/or contraction of the inner tank 24 as a result of changes in temperature within the inner tank 24.

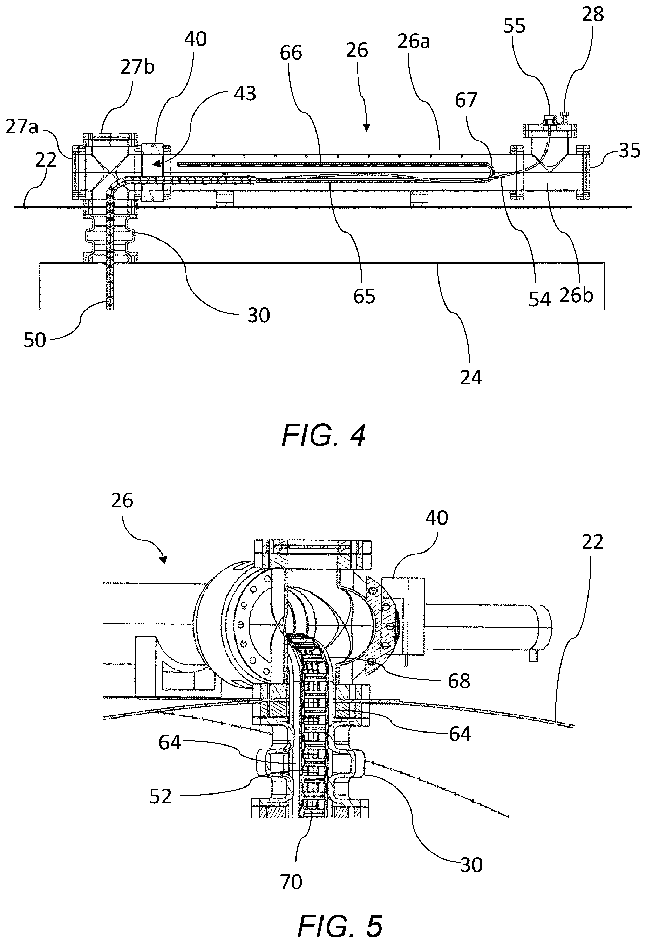

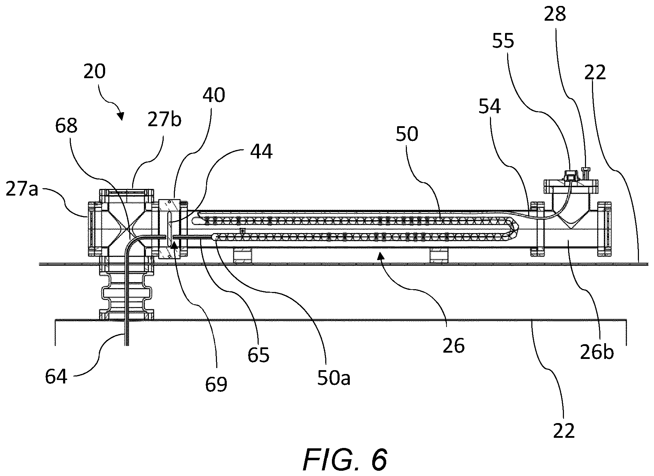

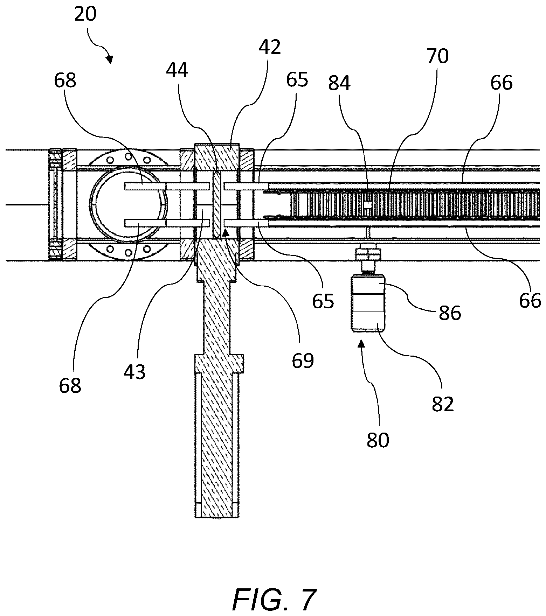

As shown in Figure 4, the collection chamber 26 comprises a cylindrical housing 26a with a fitting 26b at one end and an isolation valve 40 at the other end. The isolation valve 40 is arranged between the inner tank 24 and the collection chamber 26 such that fluid can flow between the inner tank 24 and the collection chamber 26 via the isolation valve 40. The isolation valve 40 may comprise any valve suitable for selectively isolating the collection chamber 26 from the inner tank 24, i.e. by preventing fluid flow through the isolation valve 40. Examples of such isolation valves 40 include a gate valve, a butterfly valve or a globe valve. The isolation valve 40 may comprise a housing 42 shown in Figure 7 defining a valve aperture 43 through which fluid can flow. The isolation valve 40 further comprises a closure 44 (shown in Figures 6 and 7) arranged to selectively block the valve aperture 43 and prevent fluid flow therethrough, hence isolating the collection chamber 26 from the inner tank 24.

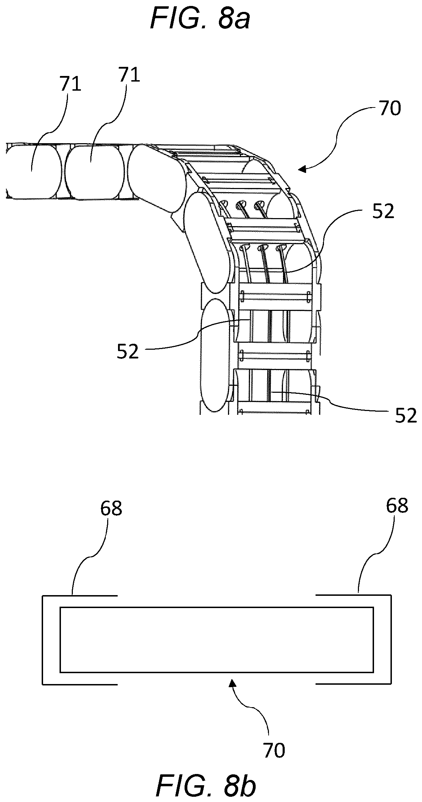

The liquid storage system 20 also comprises a measurement probe 50 which can be moved between the inner tank 24 and the collection chamber 26. The measurement probe 50 is configured to measure one or more parameters within the inner tank 24, optionally within the cryogenic liquid 21 within the inner tank 24. By way of non-limiting example, the measurement probe 50 may comprise a temperature sensor configured to determine the temperature of the cryogenic liquid 21 in the inner tank 24, or a liquid level sensor configured to determine a level of the cryogenic liquid 21. The measurement probe 50 may comprise one or more fibre optic cables 52 and a chain 70 carrying the fibre optic cables 52 as shown most clearly in Figure 8a. Each fibre optic cable 52 may have one or more fibre Bragg gratings and be configured to determine a level of the cryogenic liquid 21 in the inner tank 24. The use of fibre Bragg gratings for determining the quantity of cryogenic liquid in a tank of known dimensions is known in the art and will not be described in detail here. In other embodiments the measurement probe may comprise a different type of sensor (such as a temperature sensor) which is coupled to a flexible electrical cable, the flexible electric cable extending between the inner tank 24 and the collection chamber 26 when the measurement probe is in the inner tank.

The measurement probe 50 may be connected to an external system (not shown) via a flexible connecting cable 54 (omitted from Figure 3 for clarity and shown most clearly in Figures 4 and 6). The connecting cable 54 may for example comprise a continuation of the fibre optic cables 52, housed inside a flexible protective jacket.

The external system may comprise a light source for supplying light to the fibre optic cable(s) 52; a light receiver for receiving light from the fibre optic cable(s) 52; and computer memory or similar for monitoring and storing parameter values in real time. The measurement probe 50 may form part of a fuel quantity measurement system.

The measurement probe 50 is movable between a deployed and a retracted position. In the deployed position shown in Figure 4, most or all of the measurement probe 50 is in the inner tank 24. Where there is cryogenic fluid 21 in the inner tank 24, the measurement probe 50 may be at least partially submerged in the cryogenic fluid 21. In the retracted position shown in Figure 6, the measurement probe 50 has cleared the isolation valve 40 and is entirely within the collection chamber 26. Hence in the retracted position the measurement probe 50 does not extend into the inner tank 24. When moving between the inner tank 24 and the collection chamber 26, the measurement probe 50 may move through the isolation valve 40, optionally via the valve aperture 43 described previously.

The liquid storage system 20 may further comprise a guide rail arrangement 64-68 shown in Figures 3 and 4 which extends from the collection chamber 26 into the inner tank 24 via the isolation valve 40, optionally via the tubular bellows 30 described previously.

As shown in Figure 3, the guide rail arrangement may comprise a first portion 64 extending vertically downwardly in the inner tank 24. A second portion 65 of the guide rail arrangement extends laterally in the collection chamber 26 as shown in Figure 4. A curved portion 68 of the guide rail arrangement shown in Figures 3 and 6 connects the first and second portions 64, 65.

A third portion 66 of the guide rail arrangement extends laterally in the collection chamber 26 as shown in Figure 4. A curved portion 67 of the guide rail arrangement connects the second and third portions 65, 66 of the guide rail arrangement. The curved portion 67 of the guide rail may be removable from the second and third portions 65, 66 in the collection chamber, to enable it to be removed from the collection chamber along with probe 50.

The measurement probe 50 is coupled to, and movable along, the guide rail arrangement 64-68.

The guide rail arrangement 64-68 and tubular bellows 30 may be arranged such that the guide rail arrangement does not contact the tubular bellows 30 and/or the inner tank 24 should the inner tank 24 move relative to the outer tank 22 as described previously. It will be appreciated that the guide rail arrangement 64-68 may comprise a plurality of guide rails, for example a pair of parallel guide rails as shown in Figures 5 and 7. The measurement probe 50 may move along the guide rail arrangement, which guides the measurement probe 50 as it moves in and out of the inner tank 24. The guide rail arrangement may therefore define a path followed by the measurement probe 50 when the measurement probe 50 moves between the inner tank 24 and the collection chamber 26. The guide rail arrangement may comprise an end stop (not shown) in the inner tank 24 to limit movement of the measurement probe 50, however it will be appreciated that in other embodiments the end stop may be omitted. The guide rail arrangement may be rigidly fixed to the inner tank 24 and/or the collection chamber 26. In this way, the guide rail arrangement and/or the end stop may define a target position of the measurement probe 50 within the inner tank 24.

Where an end stop is provided by the guide rail arrangement, then a tip 50a of the measurement probe 50 may contact the end stop when the measurement probe 50 is in its deployed position. The tip 50a of the measurement probe 50 is shown in Figure 6 in its retracted position in the collection chamber 26.

The first portion 64 of the guide rail arrangement extending vertically within the inner tank 24 ensures the measurement probe 50 is oriented vertically so it can operate accurately as a liquid level sensor. The end stop (not shown) is at the bottom end of the first (vertical) portion 64 of the guide rail arrangement.

The second and third portions 65, 66 of the guide rail arrangement extend laterally within the collection chamber 26 (in this case they extend horizontally, substantially perpendicular to the first portion 64). This reduces the overall height of the liquid storage system 20 whilst still allowing the measurement probe 50 to extend downwardly from the top of the inner tank 24. This reduction in height may be particularly beneficial where the liquid storage system 20 is housed in an aircraft 10 having tight size constraints. The curved portion 68 of the guide rail arrangement provides a smooth path which the measurement probe 50 follows when moving between the inner tank 24 and the collection chamber 26, respecting minimum bend radius of the cables 52.

In the example showed in Figure 4, the portions 65-67 of the guide rail arrangement in the collection chamber 26 form a U-shape. More generally, the guide rail arrangement within the collection chamber 26 may have one or more curved portions. Providing a guide rail arrangement which follows a bent or winding path within the collection chamber 26 reduces the length of the collection chamber 26 required to house the measurement probe 50 in the retracted position, particularly when the measurement probe 50 comprises an elongate flexible component such as a fibre optic cable 52.

The measurement probe 50 comprises a chain 70 carrying the optical fibres 52 as shown most clearly in Figure 8a. The chain 70 comprises a series of links 71, where each link 71 is rotatably connected to the adjacent link(s). Each fibre optic cable 52 passes through a pair of apertures in each link 71, thereby coupling the fibre optic cables 52 to the chain 70.

Alternatively, the fibre optic cables 52 may be coupled to a different type of chain, for example a corrugated flexible tube.

The chain 70 is mounted to the guide rail arrangement 64-68 so that the curved portions 67, 68 of the guide rail arrangement force the measurement probe 50 to follow a curved path as it is driven in and out of the collection chamber 26.

Figure 8b is a schematic cross-sectional view showing an example of a suitable coupling between the chain 70 and the guide rail arrangement 68. Each section of the guide rail arrangement comprises a pair of U-shaped rails. Figure 8b shows the curved portion 68 of the guide rail arrangement but the other portions 64-67 are similar. The chain 70 is constrained between the U-shaped guide rails as shown, so the guide rail arrangement can constrain and guide the measurement probe 50 as it moves between the inner tank 24 and the collection chamber 26. The measurement probe 50 slides along the guide rail arrangement 64-68 as it moves.

The isolation valve 40 is coupled to the bellows 30 by a fitting with a pair of windows 27a, 27b as shown most clearly in Figures 4 and 6. The window 27a allows a user to view inside the collection chamber 26, for example to confirm when the measurement probe 50 is in the retracted position inside the collection chamber 26. The window 27b allows a user to view inside the inner tank 24. This may for example allow the user to confirm when the measurement probe 50 is fully deployed inside the collection chamber 26.

The fitting 26b at the end of the collection chamber 26 may further comprise a port 28 for connecting to a pump or similar (not shown) for purging the collection chamber 26. Purging is here defined as removing fluid from the collection chamber 26 whilst fluidically sealed from the inner tank 24. The collection chamber 26 may be purged prior to being opened. In this way, a user may remove fluid from the collection chamber 26 prior to accessing the measurement probe 50 in the collection chamber 26. This may be particularly beneficial where the collection chamber 26 stores a cryogenic fluid.

In the example shown in Figure 3, the liquid storage system 20 further comprises a pressure sensor 29 in the collection chamber 26. Since the collection chamber 26 and inner tank 24 are fluidically connected via the isolation valve 40, the pressure in the inner tank 24 and collection chamber 26 will be equal. As such, positioning a pressure sensor 29 in the collection chamber 26 provides a convenient method of monitoring pressure inside the inner tank 24 without requiring access to the inner tank 24 directly. This may improve ease of maintenance of the pressure sensor 29 and/or the liquid storage system 20.

Figures 4 and 5 show an example of the measurement probe 50 in a deployed position. In the deployed position, the isolation valve 40 is open and the tip 50a of the measurement probe 50 is within the inner tank 24. The chain 70 extends from the collection chamber 26 into the inner tank 24 via the isolation valve 40, with some of the chain 70 remaining in the collection chamber 26 as shown in Figure 4. The connecting cable 54 extends from a connection point 55 on the fitting 26b, the connection point 55 connectable to an external system (not shown) as described previously.

Figure 5 is a cross-sectional view showing the chain 70 and fibre optic cables 52 extending into the inner tank 24 via the tubular bellows 30. As discussed previously in relation to Figure 3, the measurement probe is forced to follow a curved path by the curved portion 68 of the guide rail arrangement.

Figures 6 and 7 show the measurement probe 50 in a retracted position. In the retracted position, the measurement probe 50 (including its tip 50a) is stored entirely within the collection chamber 26 and does not extend into the inner tank 24. The isolation valve 40 is closed such that the collection chamber 26 is fluidically isolated from the inner tank 24.

As shown in Figure 7, the isolation valve 40 comprises a closure 44 which closes one end of the collection chamber 26. In order to allow the closure 44 to extend across the full width of the collection chamber 26, a gap 69 is provided in the guide rail arrangement 65 through which the closure 44 is movable as shown most clearly in Figure 7. The gap 69 may be large enough that the closure 44 does not contact the guide rail arrangement 65 when closed. The gap 69 may be smaller than the smallest link 71 of the chain 70, to reduce the likelihood of the chain 70 becoming disengaged from the guide rail arrangement as it moves across the gap 69.

The liquid storage system 20 may further comprise a drive mechanism 80 as shown in Figure 7. The drive mechanism 80 is arranged to engage the chain 70 to move the measurement probe 50 between the inner tank 24 and the collection chamber 26. By way of non-limiting example, the drive mechanism 80 may comprise a motor 82 arranged to rotate a pinion gear 84, the pinion gear 84 arranged to engage subsequent links 71 of the chain 70 to move the chain 70 as the pinion gear 84 rotates. In this way, the drive mechanism 80 can deploy and retract the measurement probe 50 by rotating the pinion gear 84 in opposite directions. It will be appreciated that an alternative drive mechanism 80 may be used, such as for example a linear actuator (not shown). A motor 82 and pinion gear 84 arrangement may be preferable for providing a compact arrangement for moving the measurement probe 50. The drive mechanism 80 may further comprise a clutch 86 for selectively decoupling the pinion gear 84 from the chain 70. This may allow the chain 70 to be removed from the drive mechanism 80, and optionally from the collection chamber 26, for example for maintenance.

The fibre optic cables 52 and chain 70 may be provided together as a pre-assembled component prior to assembly within the liquid storage system 20. Figure 8a shows a portion of an example of such a pre-assembled component. The measurement probe 50 comprises three fibre optic cables 52, although it will be appreciated that the measurement probe 50 may comprise any number of fibre optic cables 52. Providing the measurement probe 50 as a single pre-assembled component may improve ease of maintenance, since the measurement probe 50 may be more easily removed by handling the supporting chain 70 rather than by handling the fibre optic cables 52 directly.

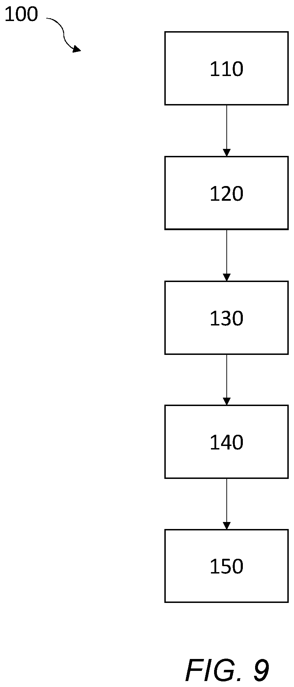

Figure 9 shows a method 100 of accessing the measurement probe 50 within the liquid storage system 20. At step 110, the measurement probe 50 is retracted from the inner tank 24 into the collection chamber 26. The measurement probe 50 may be moved by driving the chain 70 as described previously with reference to Figures 4 to 7. At step 120, the isolation valve 40 is actuated to (fluidically) isolate the collection chamber 26 from the inner tank 24. At step 130, the collection chamber 26 is purged as described with reference to Figure 4, once the collection chamber 26 is isolated from the inner tank 24. It will be appreciated that in some cases the purging of the collection chamber 26 (i.e. step 130) may be omitted. At step 140, the collection chamber 26 is opened to provide a user access to the measurement probe 50. The collection chamber 26 may be opened by removing a cover 35 at one end of the fitting 26b. Finally, at step 150 the user accesses the measurement probe 50 in the collection chamber 26. The user can then visually inspect the measurement probe 50, repair the measurement probe 50, or remove the measurement probe 50 from the collection chamber 26 so it can be repaired or replaced. For instance the measurement probe 50 (including the chain and fibre optic cables 52) and the connecting cable 54 may be removed together from the collection chamber 26 as a single unit.

As mentioned above, the curved portion 67 of the guide rail arrangement may be removable from the second and third portions 65, 66 of the guide rail arrangement. This enables the measurement probe 50 and connecting cable 54 to be removed together from the collection chamber 26 along with the curved portion 67 of the guide rail arrangement. This enables the chain 70 to be slid out of the straight portions 65, 66 of the guide rail arrangement, which remain in the collection chamber 26.

Optionally a tray (not shown) is provided. The measurement probe 50, connecting cable 54 and curved portion 67 are pre-assembled on the tray, which is then slid in and out of the collection chamber 26 during the maintenance process of Figure 9.

Once a new measurement probe 50 has been installed in the collection chamber 26, the collection chamber 26 is closed, the isolation valve 40 is opened, and the new measurement probe is driven to its deployed position in the inner tank 24.

The evacuated space 23 between the outer tank 24 and the inner tank 22 remains evacuated during the process of Figure 9.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A cryogenic liquid storage system comprising:
an outer tank;
an inner tank inside the outer tank and configured to store a cryogenic liquid;
an isolation valve;
a collection chamber outside the outer tank and fluidically connected to the inner tank to enable fluid to flow from the inner tank to the collection chamber via the isolation valve, wherein the isolation valve can be actuated to isolate the collection chamber from the inner tank; and
a measurement probe movable between the inner tank and the collection chamber.

2. A cryogenic liquid storage system according to claim 1, further comprising cryogenic liquid in the inner tank, wherein the measurement probe is at least partially submerged in the cryogenic liquid.

3. A cryogenic liquid storage system according to claim 2, wherein the measurement probe is configured to measure a quantity of cryogenic liquid in the inner tank.

4. A cryogenic liquid storage system according to any preceding claim, further comprising a guide rail arrangement extending from the collection chamber into the inner tank, wherein the measurement probe is coupled to the guide rail arrangement and configured to move along the guide rail arrangement as it moves between the inner tank and the collection chamber.

5. A cryogenic liquid storage system according to claim 4, wherein a first portion of the guide rail arrangement extends downwardly within the inner tank, a second portion of the guide rail arrangement extends laterally within the collection chamber, and a curved portion of the guide rail arrangement connects the first portion of the guide rail arrangement to the second portion of the guide rail arrangement.

6. A cryogenic liquid storage system according to claim 4 or 5, wherein the isolation valve comprises a housing defining a valve aperture through the isolation valve, and a closure for blocking the valve aperture, and wherein the guide rail arrangement comprises a gap through which the closure is movable.

7. A cryogenic liquid storage system according to any of claims 4 to 6, wherein the guide rail arrangement has at least one curved portion within the collection chamber.

8. A cryogenic liquid storage system according to any preceding claim, further comprising a tubular bellows between the inner tank and the outer tank, wherein the bellows fluidically connects the inner tank to the collection chamber.

9. A cryogenic liquid storage system according to any preceding claim, wherein the measurement probe further comprises a chain, and the system further comprises a drive mechanism arranged to engage the chain to move the measurement probe between the inner tank and the collection chamber.

10. A cryogenic liquid storage system according to claim 9, wherein when the measurement probe is in the inner tank, the chain extends from the collection chamber into the inner tank via the isolation valve.

11. A cryogenic liquid storage system according to any preceding claim, further comprising a pressure sensor in the collection chamber.

12. A cryogenic liquid storage system according to any preceding claim, wherein the measurement probe comprise one or more cables; and when the measurement probe is in the inner tank, the (or each) cable extends from the collection chamber into the inner tank via the isolation valve.

13. A cryogenic liquid storage system according to any preceding claim, wherein the measurement probe is movable between the inner tank and the collection chamber via the isolation valve.

14. An aircraft comprising the cryogenic liquid storage system of any preceding claim.

15. A method of accessing a measurement probe of a cryogenic liquid storage system, the cryogenic liquid storage system comprising: an outer tank; an inner tank inside the outer tank; a cryogenic liquid in the inner tank; an isolation valve; a collection chamber outside the outer tank and fluidically connected to the inner tank to enable fluid to flow from the inner tank to the collection chamber via the isolation valve; and a measurement probe in the inner tank, the method comprising:
retracting the measurement probe from the inner tank into the collection chamber through the isolation valve;
actuating the isolation valve to isolate the collection chamber from the inner tank, thereby preventing fluid from flowing from the inner tank to the collection chamber via the isolation valve;
opening the collection chamber; and
accessing the measurement probe in the opened collection chamber.
